# EUROPEAN PATENT APPLICATION

(11) **EP 2 487 776 A2**
(43) Date of publication of application: **15.08.2012**
(21) Application number: 11786038.7
(22) Date of filing: 16.05.2011
(51) Int. Cl.: H02J 9/00

(54) **SUBSIDIARY POWER SOURCE FOR BIDIRECTIONAL POWER SUPPLY**

(71) Applicant: Huawei Technologies Co., Ltd., Shenzhen, Guangdong 518129 (CN)
(72) Inventor: LIANG, Yongtao, Shenzhen Guangdong 518129 (CN)
(74) Representative: Isarpatent
(86) International application number: PCT/CN2011/074113
(87) International publication number: WO 2011/147266

(57) **Abstract**

An auxiliary power source for bi-directional power supply is disclosed by the present invention, which includes a bi-directionally isolated converter (21), a first non-isolated converter (22), a second non-isolated converter (23), a first merging circuit selector (24), and a second merging circuit selector (25), where the first merging circuit selector (24) is connected to a primary voltage line (26), the bi-directionally isolated converter (21), and the first non-isolated converter (22), and the second merging circuit selector (25) is connected to a secondary voltage line (27), the bi-directionally isolated converter (21), and the second non-isolated converter (23). In the auxiliary power source for bi-directional power supply according to the embodiments of the present invention, only one bi-directionally isolated converter (21) is required.

## Description

### FIELD OF THE INVENTION

The present invention relates to the field of power source technologies, and in particular, to an auxiliary power source for bi-directional power supply.

### BACKGROUND OF THE INVENTION

In a switch power source, an auxiliary power source is the basis for ensuring the stable work of the switch power source. With the continuous development of a primary power supply module function in communications, a new requirement is raised on the auxiliary power source. For example, in the North American standard, the communication power source is required to have a power detection function when an alternating current is input, so the auxiliary power source is required to obtain power from not only the alternating current but also a storage battery at an output end.

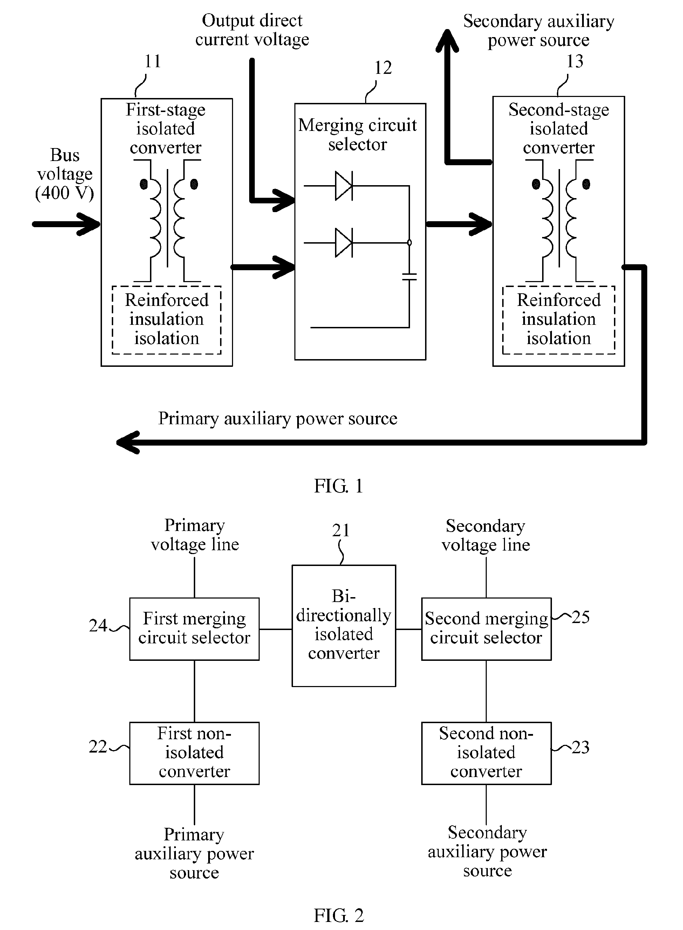

FIG. 1 is a schematic structural diagram of a conventional auxiliary power source for bi-directional power supply. As shown in FIG. 1, the auxiliary power source is implemented through two cascaded isolated converters. When the alternating current exists, a 400 V direct current bus voltage is isolated and converted through a first-stage isolated converter 11 to obtain a low direct current voltage. The low direct current voltage and an output direct current voltage each are transmitted to a merging circuit selector 12. The merging circuit selector 12 selects a higher voltage from the low direct current voltage and the output direct current voltage and conveys the higher voltage to a second-stage isolated converter 13 for isolation and conversion, to obtain required voltages of a primary auxiliary power source and a secondary auxiliary power source. When the alternating current does not exist, the output direct current voltage is provided to the second-stage isolated converter 13 through the merging circuit selector 12, and is converted by the second-stage isolated converter into the required voltages of the primary auxiliary power source and the secondary auxiliary power source.

Through the existing auxiliary power source for bi-directional power supply, in the process of voltage conversion, when the alternating current exists, the 400 V direct current bus voltage needs to be isolated and converted twice through the two cascaded isolated converters to obtain the required voltage of the auxiliary power source, so the efficiency of the auxiliary power source is low due to the cascading; moreover, the isolation across the primary and the secondary needs to be reinforced insulation isolation, so the isolation cost is high and the volume is large; moreover, if the converter in any stage is faulty, the auxiliary power source cannot supply power normally, so the reliability is low.

### SUMMARY OF THE INVENTION

The present invention provides an auxiliary power source for bi-directional power supply, to overcome disadvantages of the high isolation cost, the large volume, and low auxiliary power source efficiency in the prior art, reduce the isolation cost and volume of the auxiliary power source for bi-directional power supply, and improve the auxiliary power source efficiency of the auxiliary power source for bi-directional power supply.

An embodiment of the present invention provides an auxiliary power source for bi-directional power supply, which includes:
a bi-directionally isolated converter, a first non-isolated converter, a second non-isolated converter, a first merging circuit selector, and a second merging circuit selector, where
the first merging circuit selector is connected to a primary voltage line, the bi-directionally isolated converter, and the first non-isolated converter;
the second merging circuit selector is connected to a secondary voltage line, the bi-directionally isolated converter, and the second non-isolated converter;
the bi-directionally isolated converter is configured to: isolate and convert a voltage of the first merging circuit selector, output the isolated and converted voltage to the second merging circuit selector; isolate and convert a voltage of the second merging circuit selector, and output the isolated and converted voltage to the first merging circuit selector;
the first merging circuit selector is configured to select a higher voltage from a voltage on the primary voltage line and a voltage on the bi-directionally isolated converter and output the selected voltage to the first non-isolated converter;
the first merging circuit selector is configured to select a higher voltage from a voltage on the secondary voltage line and the voltage on the bi-directionally isolated converter and output the selected voltage to the second non-isolated converter;
the first non-isolated converter is configured to output a voltage required by a primary auxiliary power source; and
the second non-isolated converter is configured to output a voltage required by a secondary auxiliary power source.

The auxiliary power source for bi-directional power supply provided by the present invention includes one bi-directionally isolated converter, two non-isolated converters, and two merging circuit selectors. When supply power of the primary and the secondary is abnormal, the bi-directionally isolated converter and the respective non-isolated converters can also provide the required voltages for the primary auxiliary power source and the secondary auxiliary power source. Since only one bi-directionally isolated converter is required, the isolation cost and volume are reduced. When supply power of the primary and the secondary is normal, the required voltage can be provided for the primary auxiliary power source directly through the non-isolated converter of the primary auxiliary power source and the required voltage can be provided for the secondary auxiliary power source directly through the non-isolated converter of the secondary auxiliary power source, thereby improving the conversion efficiency of the auxiliary power source.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only about some embodiments of the present invention, and persons of ordinary skill in the art can derive other drawings from the accompanying drawings without creative efforts.

FIG. 1 is a schematic structural diagram of a conventional auxiliary power source for bi-directional power supply;

FIG. 2 is a schematic structural diagram of an auxiliary power source for bi-directional power supply provided by Embodiment 1 of the present invention;

FIG. 3 is a schematic structural diagram of an auxiliary power source for bi-directional power supply provided by Embodiment 2 of the present invention; and

FIG. 4 is a schematic diagram of application scenarios of the auxiliary power source for bi-directional power supply provided by Embodiment 2 of the present invention.

### DETAILED DESCRIPTION OF THE EMBODIMENTS

In order to make the objectives, technical solutions, and advantages of the present invention more comprehensible, the technical solutions according to embodiments of the present invention are clearly and completely described in the following with reference to the accompanying drawings. Apparently, the embodiments in the following description are merely a part rather than all of the embodiments of the present invention. All other embodiments obtained by persons of ordinary skill in the art based on the embodiments of the present invention without creative efforts shall fall within the protection scope of the present invention.

FIG. 2 is a schematic structural diagram of an auxiliary power source for bi-directional power supply provided by Embodiment 1 of the present invention. As shown in FIG. 2, the auxiliary power source for bi-directional power supply may include: a bi-directionally isolated converter 21, a first non-isolated converter 22, a second non-isolated converter 23, a first merging circuit selector 24, and a second merging circuit selector 25, where
the first merging circuit selector 24 is connected to a primary voltage line, the bi-directionally isolated converter 21, and the first non-isolated converter 22;
the second merging circuit selector 25 is connected to a secondary voltage line, the bi-directionally isolated converter 21, and the second non-isolated converter 23;
the bi-directionally isolated converter 21 is configured to isolate and convert a voltage of the first merging circuit selector 24, and output the isolated and converted voltage to the second merging circuit selector 25; isolate and convert a voltage of the second merging circuit selector 25, and output the isolated and converted voltage to the first merging circuit selector 24;
the first merging circuit selector 24 is configured to select a higher voltage from a voltage on the primary voltage line and a voltage on the bi-directionally isolated converter 21 and output the selected voltage to the first non-isolated converter 22;
the first merging circuit selector 24 is configured to select a higher voltage from a voltage on the secondary voltage line and the voltage on the bi-directionally isolated converter 21 and output the selected voltage to the second non-isolated converter 23;
the first non-isolated converter 22 is configured to output a voltage required by a primary auxiliary power source; and
the second non-isolated converter 23 is configured to output a voltage required by a secondary auxiliary power source.

Specifically, the primary voltage line and the secondary voltage line of the auxiliary power source for bi-directional power supply both have power supply, a required voltage can be provided for the primary auxiliary power source directly through the non-isolated converter of the primary auxiliary power source without isolation and secondary conversion and a required voltage can be provided for the secondary auxiliary power source directly through the non-isolated converter of the secondary auxiliary power source without isolation and secondary conversion, so the conversion efficiency of the auxiliary power source is high; when the voltage on the primary voltage line or on the secondary voltage line is abnormal, the voltage is isolated and converted by the bi-directionally isolated converter and then corresponding non-isolated converters can provide the required voltages for the primary auxiliary power source and the secondary auxiliary power source.

The auxiliary power source for bi-directional power supply of this embodiment includes one bi-directionally isolated converter, two non-isolated converters, and two merging circuit selectors. When power supply of a primary and a secondary is abnormal, the bi-directionally isolated converter and the respective non-isolated converters can also provide the required voltages for the primary auxiliary power source and the secondary auxiliary power source. Since only one bi-directionally isolated converter is required, the isolation cost and volume are reduced. When the primary and the secondary supply power normally, the required voltage can be provided for the primary auxiliary power source directly through the non-isolated converter of the primary auxiliary power source and the required voltage can be provided for the secondary auxiliary power source directly through the non-isolated converter of the secondary auxiliary power source , thereby improving the conversion efficiency of the auxiliary power source.

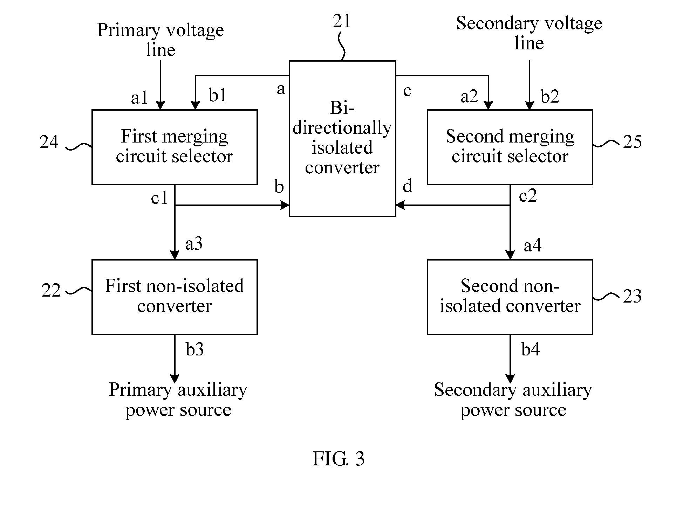

FIG. 3 is a schematic structural diagram of an auxiliary power source for bi-directional power supply provided by Embodiment 2 of the present invention. As shown in FIG. 3, a first input end a1 of a first merging circuit selector 24 of the auxiliary power source for bi-directional power supply is connected to a primary voltage line, and a second input end b1 of the first merging circuit selector 24 is connected to a first output end a of a bi-directionally isolated converter 21.

An output end c1 of the first merging circuit selector 24 is connected to a first input end b of the bi-directionally isolated converter 21 and an input end a3 of a first non-isolated converter 22, and an output end b3 of the first non-isolated converter 22 is connected to a primary auxiliary power source.

Furthermore, a first input end a2 of a second merging circuit selector 25 is connected to a secondary voltage line, and a second input end b2 of the second merging circuit selector 25 is connected to a second output end c of the bi-directionally isolated converter 21.

An output end c2 of the second merging circuit selector 25 is connected to a second input end d of the bi-directionally isolated converter 21 and an input end a4 of a second non-isolated converter 23, and an output end b4 of the second non-isolated converter 23 is connected to a secondary auxiliary power source.

Reinforced insulation isolation is disposed in the bi-directionally isolated converter 21, and the first non-isolated converter 22 and the second non-isolated converter 23 each may be a direct current to direct current (DC/DC) converter.

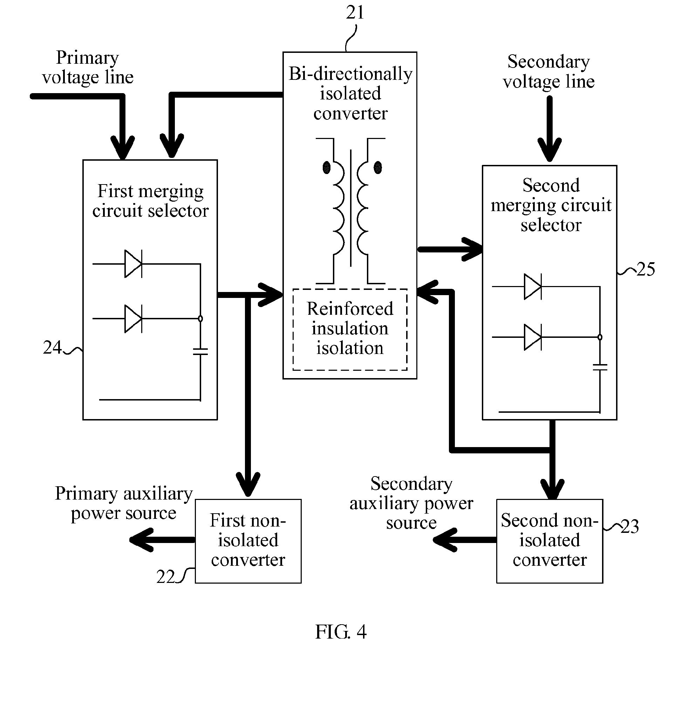

FIG. 4 is a schematic diagram of application scenarios of the auxiliary power source for bi-directional power supply provided by Embodiment 2 of the present invention. As shown in FIG. 4, work scenarios of the auxiliary power source for bi-directional power supply may include the following cases.

Case 1: An alternating current exists and a direct current does not exist. For example, a voltage (also called a bus voltage) of the primary voltage line is 400 V, and a voltage (also called an output direct current voltage) of the secondary voltage line is 0. The voltage of the primary voltage line is input into the first merging circuit selector 24. Since the direct current does not exist, a voltage input by the bi-directionally isolated converter 21 into the first merging circuit selector 24 is low. The first merging circuit selector 24 selects the 400 V voltage and outputs the 400 V voltage to the first non-isolated converter 22. The first non-isolated converter 22 converts the 400 V voltage, and then the primary auxiliary power source outputs a voltage required by the primary. Moreover, the voltage of the primary voltage line is output to the bi-directionally isolated converter 21 through the first merging circuit selector 24, is converted by the bi-directionally isolated converter 21, and then is output to the second merging circuit selector 25. Since the output voltage of the secondary is 0 when the direct current does not exist, the voltage of the primary voltage line converted by the bi-directionally isolated converter 21 is selected by the second merging circuit selector 25 to be outputted to the second non-isolated converter 23. The second non-isolated converter 23 converts the voltage, and then the secondary auxiliary power source outputs a voltage required by the secondary.

Case 2: When the alternating current does not exist and the direct current exists, the voltage of the secondary voltage line is input into the second merging circuit selector 25. Since the alternating current does not exist, a voltage input by the bi-directionally isolated converter 21 into the second merging circuit selector 25 is low. The second merging circuit selector 25 outputs the voltage of the secondary voltage line to the second non-isolated converter 23. The second non-isolated converter 23 converts the voltage of the secondary voltage line, and then the secondary auxiliary power source outputs a voltage required by the secondary. Moreover, the voltage of the secondary voltage line is output to the bi-directionally isolated converter 21 through the second merging circuit selector 25, converted by the bi-directionally isolated converter 21, and then output to the first merging circuit selector 24. Since the voltage of the primary voltage line is 0 when the alternating current does not exist, the voltage of the secondary voltage line converted by the bi-directionally isolated converter 21 is selected by the second merging circuit selector 24 to be outputted to the first non-isolated converter 22. The first non-isolated converter 22 converts the voltage, and then the primary auxiliary power source outputs a voltage required by the primary.

Case 3: The alternating current and the direct current both exist. For example, the voltage of the primary voltage line is 400 V, and the voltage of the secondary voltage line is of another value. The first merging circuit selector 24 compares the voltage of the primary voltage line with the voltage of the secondary voltage line converted by the bi-directionally isolated converter 21, and outputs a higher voltage of the two voltages to the first non-isolated converter 22. The first non-isolated converter 22 converts the higher voltage, and then the primary auxiliary power source outputs a voltage required by the primary. The second merging circuit selector 25 compares the voltage of the secondary voltage line with the voltage of the primary voltage line converted by the bi-directionally isolated converter 21, and outputs a higher voltage of the two voltages to the second non-isolated converter 23. The second non-isolated converter 23 converts the voltage, and then the secondary auxiliary power source outputs a voltage required by the secondary.

In this embodiment, if the input and the output of the auxiliary power source for bi-directional power supply both work normally (referring to Case 3), and the voltage required by the primary auxiliary power source is provided directly through the non-isolated converter of the primary auxiliary power source, and the voltage required by the secondary auxiliary power source is provided directly through the non-isolated converter of the secondary auxiliary power source, and the required voltages can be provided for the primary auxiliary power source and the secondary auxiliary power source without isolation and secondary conversion, thereby greatly improving the conversion efficiency of the auxiliary power source; if the input of the auxiliary power source for bi-directional power supply is abnormal (Case 1 or Case 2), the voltage of the secondary is delivered to the primary through the bi-directional converter and is converted by the primary auxiliary power source into the voltage required by the primary, when the output voltage is not generated, the primary power source is delivered to the secondary through the bi-directional converter and is converted by the secondary auxiliary power source into the voltage required by the secondary. Only one bi-directionally isolated converter across the primary and the secondary is used to provide the required voltages for the primary auxiliary power source and the secondary auxiliary power source, thereby reducing the isolation cost and volume.

Finally, it should be noted that the foregoing embodiments are merely provided for describing the technical solutions of the present invention, but not intended to limit the present invention. It should be understood by persons of ordinary skill in the art that although the present invention has been described in detail with reference to the foregoing embodiments, modifications can be made to the technical solutions described in the foregoing embodiments, or equivalent replacements can be made to some technical features in the technical solutions, as long as such modifications or replacements do not cause the essence of corresponding technical solutions to depart from the spirit and scope of the technical solutions in the embodiments of the present invention.

## Claims

1. An auxiliary power source for bi-directional power supply, comprising: a bi-directionally isolated converter, a first non-isolated converter, a second non-isolated converter, a first merging circuit selector, and a second merging circuit selector, wherein
the first merging circuit selector is connected to a primary voltage line, the bi-directionally isolated converter, and the first non-isolated converter;
the second merging circuit selector is connected to a secondary voltage line, the bi-directionally isolated converter, and the second non-isolated converter;
the bi-directionally isolated converter is configured to: isolate and convert a voltage of the first merging circuit selector, output the isolated and converted voltage to the second merging circuit selector; isolate and convert a voltage of the second merging circuit selector, and output the isolated and converted voltage to the first merging circuit selector;
the first merging circuit selector is configured to select a higher voltage from a voltage on the primary voltage line and a voltage on the bi-directionally isolated converter and output the selected voltage to the first non-isolated converter;
the first merging circuit selector is configured to select a higher voltage from a voltage on the secondary voltage line and the voltage on the bi-directionally isolated converter and output the selected voltage to the second non-isolated converter;
the first non-isolated converter is configured to output a voltage required by a primary auxiliary power source; and
the second non-isolated converter is configured to output a voltage required by a secondary auxiliary power source.

2. The auxiliary power source for bi-directional power supply according to claim 1, wherein a first input end of the first merging circuit selector is connected to the primary voltage line, and a second input end of the first merging circuit selector is connected to a first output end of the bi-directionally isolated converter; and
an output end of the first merging circuit selector is connected to a first input end of the bi-directionally isolated converter and an input end of the first non-isolated converter, and an output end of the first non-isolated converter is connected to the primary auxiliary power source.

3. The auxiliary power source for bi-directional power supply according to claim 1 or 2, wherein a first input end of the second merging circuit selector is connected to the secondary voltage line, and a second input end of the second merging circuit selector is connected to a second output end of the bi-directionally isolated converter; and
an output end of the second merging circuit selector is connected to a second input end of the bi-directionally isolated converter and an input end of the second non-isolated converter, and an output end of the second non-isolated converter is connected to the secondary auxiliary power source.

4. The auxiliary power source for bi-directional power supply according to claim 1 or 2, wherein reinforced insulation isolation is disposed in the bi-directionally isolated converter.

5. The auxiliary power source for bi-directional power supply according to claim 1 or 2, wherein the first non-isolated converter and the second non-isolated converter are direct current to direct current converters.
